# EUROPÄISCHE PATENTSCHRIFT

(11) **EP 1 754 004 B1**
(45) Veröffentlichungstag und Bekanntmachung des Hinweises auf die Patenterteilung: **14.11.2018**
(21) Anmeldenummer: 05729806.9
(22) Anmeldetag: 05.04.2005
(51) Int. Cl.: F24D 19/10, G05D 23/19

(54) **KÜHL- UND/ODER HEIZVORRICHTUNG**
COOLING AND/OR HEATING DEVICE
DISPOSITIF DE REFROIDISSEMENT ET/OU DE CHAUFFAGE

(30) Priorität: 07.04.2004 DE 102004017593
(43) Veröffentlichungstag der Anmeldung: 21.02.2007
(73) Patentinhaber: Robert Bosch GmbH, 70442 Stuttgart (DE)
(72) Erfinder: Bauer, Albert, 80939 München (DE)
(86) Internationale Anmeldenummer: PCT/EP2005/051516
(87) Internationale Veröffentlichungsnummer: WO 2005/098318

(56) Entgegenhaltungen:
- DE-A1- 4 203 613
- DE-A1- 4 221 725
- DE-A1- 19 911 866
- DE-A1- 19 912 588

## Beschreibung

Die Erfindung betrifft eine Kühl- und/oder Heizvorrichtung gemäß der im Oberbegriff des Anspruches 1 angegebenen Art.

Eine derartige Kühl- und/oder Heizvorrichtung ist beispielsweise aus der EP 1 207 355 A2 bekannt und weist ein Leitungsnetz für zumindest ein Gebäude mit einer Hauptversorgungsleitung auf. Die Hauptversorgungsleitung ist mit einem Hauptvorlauf und einem Hauptrücklauf versehen. Ein Fluid dient als Wärmeträger oder Kühlmittel im Leitungsnetz. An eine Verteilereinheit ist ein Heizkreislauf, ein Brauchwasserkreislauf und ein Lüftungskreislauf angeschlossen, der wiederum Heiz-/Kühlstränge aufweist, die mit zumindest jeweils einem Ventil und zumindest einem Verbraucher, wie einem Heiz-/- Kühlkörper, einem Wärmetauscher oder ähnliches, versehen sind. Die Verteilereinheit mit den angeschlossenen Kreisläufen bildet dabei eine Versorgungseinheit. Der Versorgungseinheit ist ein Ventil vor- oder nachgeschaltet, das in Abhängigkeit des Differenzdruckes zwischen Zuführleitung und Rückführleitung gesteuert wird. Durch dieses Differenzdruckventil wird eine Differenzdruckstabilisierung zwischen Zuführleitung und Rückführleitung der Versorgungseinheit erreicht, damit der Druck in der Versorgungseinheit nahezu konstant gehalten wird und somit die Versorgungseinheiten gleichmäßig versorgt werden.

Die einzelnen Kreisläufe in der Versorgungseinheit bilden sogenannte hydraulische Schaltungen, die jeweils identisch, aber auch unterschiedlich realisiert sein können.

Des Weiteren ist aus der EP 1 116 921 A2 ein Raumklimatisierungssystem für Gebäude bekannt, das mit einer Temperaturvorrichtung zum Erwärmen und/oder Abkühlen eines Wärme- und/oder Kältetransportmediums, mehreren, die Wärme des Mediums an die Umgebung abgebenden und/oder die Wärme der Umgebung in das Medium aufnehmenden Wärmetauschern, Rohrleitungen, über welche die Wärmetauscher und die Temperiervorrichtung zum Transport des Mediums miteinander verbunden sind, und den Wärmetauschern zugeordneten Ventile zum Einstellen der die Wärmetauscher durchströmenden Mengen an Medium versehen ist. Zudem ist eine Mediendruck-Einstellvorrichtung zum Verändern des Drucks des Mediums, den Ventilen zugeordnete Drucksensoren und Stellglieder für die Ventile zum Verstellen der Ventile vorgesehen. Über die Mediendruck-Einstellvorrichtung kann eine zentrale Sollwertvorgabe erfolgen, um beispielsweise die Nachtabsenkung zentral zu steuern. Über vorbestimmte Druckschwankungen werden Drucksensoren Signale übermittelt, welche die Ventile zwischen Nachtabsenkung und Tageinstellung schalten. Hierfür weist jeder Drucksensor ein in Abhängigkeit von dem Druck des Mediums bewegbares Sensorelement auf, das mechanisch, hydraulisch, pneumatisch oder elektrisch mit dem Stellglied des Ventils gekoppelt ist und dieses zur Einstellung des Ventils verstellt. Die Ventile sind dabei als Thermostatventile ausgebildet. Hierdurch soll erreicht werden, dass unabhängig von Signalleitungen über das Medium das Ventil beispielsweise zwischen der Tageinstellung und der Nachteinstellung geschaltet wird, also der Temperatursollwert zentral eingestellt wird.

Des Weiteren ist aus der DE 100 57 416 A1 ist eine Zentralheizung für zu beheizende Räume eines oder mehrerer Gebäude mit einem Leitungsnetz mit Vor- und Rücklaufleitungen bekannt. Mehrere, über Zu- und Ablaufleitungen angeschlossene Heizstränge sind jeweils mit einem Ventil zur Regelung/Steuerung der Raumtemperatur und mindestens einem Heizkörper als Verbraucher versehen. Hierbei weist jeder Heizstrang einen Durchlaufbegrenzer auf, der in die Zu- oder Ablaufleitung des Heizstrangs eingebracht ist. Dadurch soll ein konstantes Druckniveau an den Ventilen jedes Heizstrangs gewährleistet werden.

Das Einstellen eines konstanten Druckniveaus an den Ventilen nennt man hydraulischen Abgleich. Durch einen hydraulischen Abgleich wird bei wechselnden Betriebsbedingungen eine ausreichende Wassermengenverteilung im Leitungsnetz sichergestellt und die zulässigen Geräuschpegel werden nicht überschritten. Der hydraulische Abgleich kann dabei gemäß der Druckschrift "IKZ-Haustechnik", Heft 13, Seiten 48 ff., 1999 durch den Einsatz von Strangregelungsventilen, Durchflussreglern, Differenzdruckreglern und einer geregelten Umwälzpumpe eine wirtschaftliche Wassermengenverteilung im System sicherstellen. Hierdurch wird erreicht, dass allen Verbrauchern, nämlich Heizkörpern, Wärmetauschern und ähnlichem, jederzeit die notwendige Energie durch einen gleichmäßigen Volumenstrom bei gleicher Einstellung, beispielsweise der Thermostatventile, zur Verfügung steht. Bei einem fehlenden hydraulischen Abgleich treten neben einem erhöhten Energieverbrauch auch folgende Mängel auf: die Räume erreichen nicht die gewünschte Temperatur, die Anlagenteile werden erst zeitverzögert erwärmt, es kommt zu Raumtemperaturschwankungen auch im Teillastbereich und zu Geräuschproblemen an den Ventilen.

Ein Heiz-/Kühlkörper kann seine Leistung nur erbringen, wenn er den optimalen Volumenstrom des Heizmediums oder des Kühlmittels erhält. Ein zu geringer Volumenstrom führt zu einer verminderten Heiz-/Kühlleistung. Bekommt der Heiz-/Kühlkörper jedoch zu große Mengen an Fluid, führt dies nicht zu einem proportionalen Anstieg der Heizleistung, sondern nur zu einer geringfügig größeren Wärmeabgabe.

Es ist bekannt, Ventile voreinzustellen, also die Durchgangsöffnung der Ventile festzulegen, um dadurch einen hydraulischen Abgleich zu schaffen. Die Ventile wirken hierbei als Drossel mit der Folge, dass auch im Volllastbetrieb, wenn alle Ventile aller Heiz-/Kühlstränge vollständig geöffnet sind, ein gleiches Druckniveau vor den Ventilen herrscht.

Die bekannten Lösungen zur Realisierung eines hydraulischen Abgleichs sind jedoch aufwendig, da sie zusätzliche bauliche Maßnahmen erfordern. Zudem wird auch im Teillastbetrieb, beispielsweise wenn ein hydraulischer Abgleich nicht erforderlich ist, der Volumenstrom durch das Ventil, Strangsperren oder Durchlaufbegrenzer begrenzt.

In der DE 19911866 A1 ist ein Regelgerät für eine Großflächen-Heizung offenbart, wobei die Heizkreise der Großflächen-Heizung mit mehreren Zonen durch Vorrichtungen, die die Konstanthaltung der Temperaturdifferenz zwischen Vorlauf und Rücklauf dieser Zonen bewirken, automatisch aufeinander abgeglichen werden. Dieses Dokument offenbart den Oberbegriff des Anspruchs 1.

Aus der DE 19 912 588 A1 ist ein Verbraucher und ein Verbraucher offenbart. Jedem dieser Verbraucher ist ein Ventil vorgeschaltet, welches von einer Steuereinheit geregelt wird. Zudem ist beiden Verbrauchern V1, V2 noch ein gemeinsames Ventil nachgeschaltet. Bei dem nachgeschalteten Ventil handelt es sich um eine Strangsperre. Eine Strangsperre begrenzt den maximalen Wasserfluss durch einen Kreislauf. Durch das im Rücklauf befindliche Ventil addieren sich die Widerstände. Hierdurch kommt es zu erheblichen Regelschwankungen. Zudem bildet das Ventil im Rücklauf einen zusätzlichen Widerstand, den die Pumpe überwinden muss, was den Energieaufwand erhöht.

Der Erfindung liegt daher die Aufgabe zugrunde, eine Kühl- und/oder Heizvorrichtung gemäß der im Oberbegriff des Anspruches 1 angegebenen Art derart weiterzubilden, dass unter Vermeidung der genannten Nachteile eine einfachere und effektivere Lösung geschaffen wird und vor allem im Teillastbetrieb die Leistung der Kühl- und/oder Heizvorrichtung verbessert wird.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass vielfach die Ventile, wie die Durchgangsventile oder Dreiwegeventile, von einer zentralen Steuereinheit zur Regelung des Heiz- und/oder Kühlbedarfs der zu wärmenden oder zu kühlenden Einheiten, auch in Verbindung mit einem Temperaturregelkreis, eingestellt werden, sodass durch geringe Veränderung in der Software auch ein hydraulischer Abgleich über die in den Kreisläufen schon vorhandenen Ventile bedarfsweise erfolgen kann.

Nach der Erfindung bildet das Ventil, welche mit der Steuereinheit verbunden sind, in dem Kreislauf über einen vorbestimmten Einstellbereich des Ventils neben dem Verbraucher den einzigen Durchlaufbegrenzer des Kreislaufs in Form eines einstellbaren Ventils oder bilden die Ventile, welche mit der Steuereinheit verbunden sind, in dem Kreislauf über einen vorbestimmten Einstellbereich der Ventile, neben dem Verbraucher, die einzigen Durchlaufbegrenzer des Kreislaufs in Form einstellbarer Ventile. Diese Konstruktion hat den enormen Vorteil, dass sich sämtliche zusätzliche Maßnahmen für einen hydraulischen Abgleich, beispielsweise Strangsperren, Durchlaufbegrenzer und ähnliches, erübrigen und vor allem im Teillastbereich, wenn geringer Bedarf an einem hydraulischen Abgleich besteht, die Ventile nicht als Drossel wirken und somit die Heizleistung der Verbraucher, also der Heiz-/Kühlkörper, Wärmetauscher oder ähnliches, erheblich erhöht wird. Vor allem gibt es das schlechte Regelverhalten nun nicht mehr.

Um eine automatische Regelung des hydraulischen Abgleichs zu ermöglichen, sind Sensoren in den einzelnen Kreisläufen vorgesehen, die mit der Steuereinheit zusammenwirken und mit dieser ermitteln, ob ein hydraulischer Abgleich notwendig ist. Aufgrund der von den Sensoren erhaltenen Information werden dann entsprechende Stellsignale für die Ventile ausgelöst, die entweder einen hydraulischen Abgleich bewirken oder lediglich die Durchgangsöffnung gemäß dem Wärme-/Kühlbedarf einstellen.

Die Sensoren können hierbei unterschiedlichst im Kreislauf angeordnet sein. Gemäß der Erfindung ist vor und nach dem Verbraucher jeweils ein Sensor vorgesehen.

Der Sensor kann als Temperatur- und Drucksensor oder als Drucksensor ausgebildet sein. Wird beispielsweise der Bedarf eines hydraulischen Abgleichs über die Temperatur ermittelt, so ist die Anordnung des Sensors vor und nach dem Heiz-/Kühlkörper, Wärmetauscher oder ähnlichem von Vorteil.

Um ein Überschwingen des Systems beim Einstellvorgang des hydraulischen Abgleichs zu vermeiden, verläuft die Einstellung der Ventile in zeitlichen und im Hinblick auf den Umfang der Einstellung der Durchgangsöffnung des Ventils vorgegebenen Schritten.

Gemäß einer Ausführungsform der Erfindung wirkt das Ventil mit einem Stellmotor zusammen, der seine Stellsignale von der Steuereinheit erhält und das Stellglied des Ventils in seine durch das Stellsignal vorgegebene Position bewegt.

Insbesondere ist dabei das Ventil so ausgebildet, dass außerhalb des vorbestimmten Einstellbereichs bei vollständiger Öffnung seiner Durchgangsöffnung das Ventil nicht als Durchlaufbegrenzer/Drossel im Hinblick auf den zugeordneten Kreislauf bzw. Leitungsnetz wirkt. Hierdurch kann der durch den Leitungsquerschnitt sich ergebende und der durch eine im Leitungsnetz vorgesehene Pumpe erzeugte Volumenstrom zur Heizung bzw. Kühlung verwendet werden, ohne dass das Ventil hierbei als Widerstand wirkt. Auf einfache Weise erhöht sich dadurch die Leistung der Kühl- und/oder Heizvorrichtung im Teillastbetrieb erheblich. Messungen haben ergeben, dass dadurch eine Leistungsverbesserung von ca. 30 Prozent möglich ist.

Vorzugsweise weist die Steuereinheit einen ersten Regelkreis für die Regelung der Temperatur und einen zweiten Regelkreis für die Regelung des hydraulischen Abgleichs der Kreisläufe auf.

Die Steuereinheit ist dabei vor allem mit einer Minimumauswahleinrichtung versehen, die mit den Ausgängen des Regelkreises so verbunden ist, dass sich die aus den beiden Regelkreisen ergebenden Stellsignale für das Ventil oder die Ventile über eine Minimumauswahleinrichtung in der Steuereinheit geführt werden, wodurch das Ventil bei unterschiedlichen Stellsignalen die Minimalstellung einnimmt.

Weitere Vorteile, Merkmale und Anwendungsmöglichkeiten der vorliegenden Erfindung, einer Kühl- und/oder Heizvorrichtung ergeben sich aus der nachfolgenden Beschreibung in Verbindung mit den in der Zeichnung dargestellten Ausführungsbeispielen.

Die Erfindung wird im Folgenden anhand der in der Zeichnung dargestellten Ausführungsbeispiele näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet. In der Zeichnung bedeutet:
- Fig. 1: ein schematisches Schaltbild einer Heizvorrichtung in einem Gebäude bestehend aus mehreren Etagen nach der Erfindung,
- Fig. 2: einen schematischen Ablauf der Regelung des hydraulischen Abgleichs im Zusammenwirken mit einer herkömmlichen Temperaturregelung nach der Erfindung, und
- Fig. 3: eine weitere Ausführungsform der Erfindung, bei der das Ventil jeweils auch als Strangsperre dient.

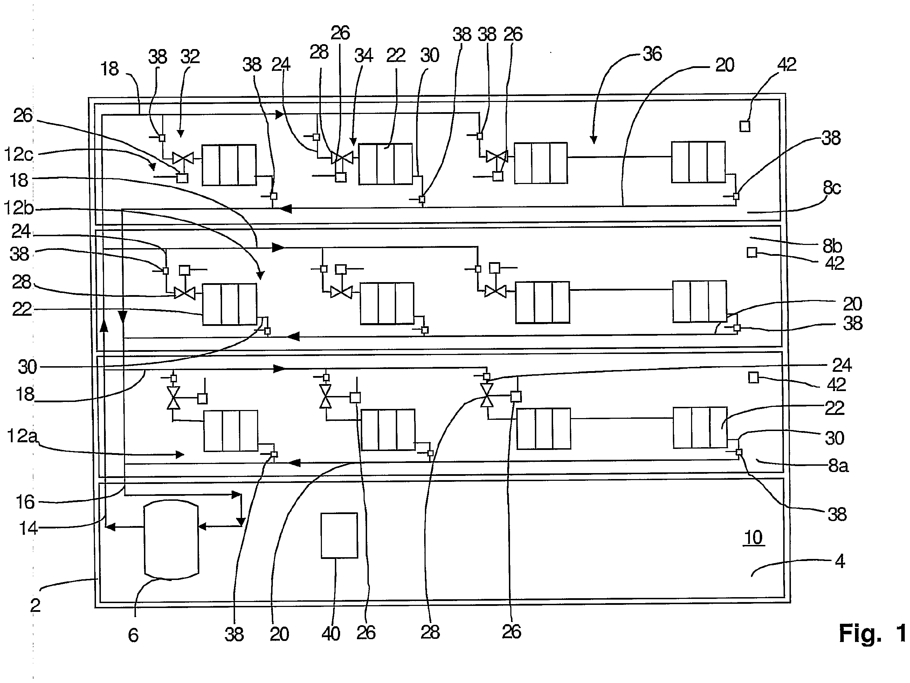

In Figur 1 ist schematisch ein Gebäude 2 dargestellt, das einen Wirtschaftsraum 4 in der Kelleretage zur Aufnahme der Wärmequelle 6 und drei beheizte Etagen 8a bis 8c umfasst, nämlich Erdgeschoss 8a, erstes Obergeschoss 8b und zweites Obergeschoss 8c. In dem Gebäude 2 sind drei Teilstränge 12a bis 12c eingebracht, die Teil einer Zentralheizung 10 sind und als erste Heizkreisläufe wirken. Der Teilstrang 12a erstreckt sich im Erdgeschoss 8a, der Teilstrang 12b im ersten Obergeschoss 8b und der Teilstrang 12c im zweiten Obergeschoss 8c.

Die Teilstränge 12a bis 12c weisen jeweils eine Vorlaufleitung 18 und eine Rücklaufleitung 20 auf, die getrennt voneinander verlaufen. Über Steigleitungen 14 und 16, die ebenfalls einen Vorlauf und einen Rücklauf aufweisen, sind die Teilstränge 12a bis 12c mit der Wärmequelle 6 verbunden.

In jeder beheizten Etage 8a bis 8c sind drei Heizstränge 32 bis 36 an den entsprechenden Teilstrang 12a bis 12c angeschlossen, die als zweite Heizkreisläufe wirken. Jeder Heizstrang 32 bis 36 ist mit einer Zulaufleitung 24 an den Vorlauf 18 des zugeordneten Teilstranges 12a bis 12c und einer Ablaufleitung 30 an den Rücklauf 20 des zugeordneten Teilstranges 12a bis 12c angeschlossen. Während die ersten beiden Heizstränge 32 und 34 jeweils nur einen Heizkörper 22 als Verbraucher aufweisen, sind im dritten dargestellten Heizstrang 36 zwei Heizkörper 22 in Serie hintereinander angeordnet. Die Leitungsdurchmesser der Vorlaufleitung 18 und Rücklaufleitung 20 eines Teilstranges 12a bis 12c sind identisch.

In der Zulaufleitung 24 eines jeden Heizstranges 32 bis 36 ist jeweils ein über einen Stellmotor 26 betätigbares Ventil 28 zur Regelung der Raumtemperatur eingebracht.

Jedem Heizkörper 22 ist ein Temperatursensor 38 vor- und nachgeschaltet, wenn ein hydraulischer Abgleich zwischen den einzelnen Heizsträngen 32 bis 36 gewünscht wird. Lediglich bei den in Reihe geschalteten Heizkörpern 22 im Teilstrang 12c und hier im dritten Heizstrang 36 sind vor dem ersten Heizkörper 22 und nach dem letzten Heizkörper 22 dieses Heizstranges 36 Temperatursensoren 38 eingebracht. Selbstverständlich würde auch nur ein Temperatursensor 38 im Vor- und Rücklauf eines Teilstranges 12a bis 12c ausreichen, wenn ein hydraulischer Abgleich zwischen den einzelnen Teilsträngen 12a bis 12c gewünscht wird.

Die Temperatursensoren 38 wirken mit einer Steuereinheit 40 zusammen und liefern die entsprechenden Vorlauf- und Rücklauftemperaturen der Heizstränge 32 bis 36 oder 12a bis 12c.

Die Stellmotoren 26 werden von der Steuereinheit 40 gesteuert. Die Temperatursensoren 38, die einen Regler 48 aufweisende Steuereinheit 40 sowie die Stellmotoren 26 mit den Ventilen 28 sind Teil eines Regelkreises für einen hydraulischen Abgleich in der Zentralheizung 10.

Des Weiteren sind in bekannter Weise weitere Sensoren 42 vorgesehen, die in herkömmlicher Weise zusammen mit der einen weiteren Regler 46 aufweisenden Steuereinheit 40, den Stellmotoren 26, den Ventilen 28 einen Regelkreis zur Temperaturregelung in den Räumen der Etagen 8a bis 8c bilden.

Beispielsweise bei mehrheitlich geöffneten Ventilen 28 kommt es in der Zentralheizung 10 normalerweise zu unterschiedlich hohen Fließgeschwindigkeiten des Wärmeträgers. Durch das Vorsehen des Regelkreises für den hydraulischen Abgleich stellt sich im Wesentlichen eine konstante Durchflussgeschwindigkeit in der Zentralheizung 10 ein. Aufgrund der nun im Wesentlichen konstanten Durchflussgeschwindigkeiten werden Druckschwankungen innerhalb des Leitungssystems der Zentralheizung 10, insbesondere in den Zulaufleitungen 24 und Ablaufleitungen 30,eines jeden Heizstranges 32 und somit an den Ventilen 28, vermieden. Infolgedessen bleibt die Hysterese der Ventile 28 in Bezug zueinander unverändert. Dies hat den Vorteil, dass die Raumtemperatur zeitgleich geregelt wird.

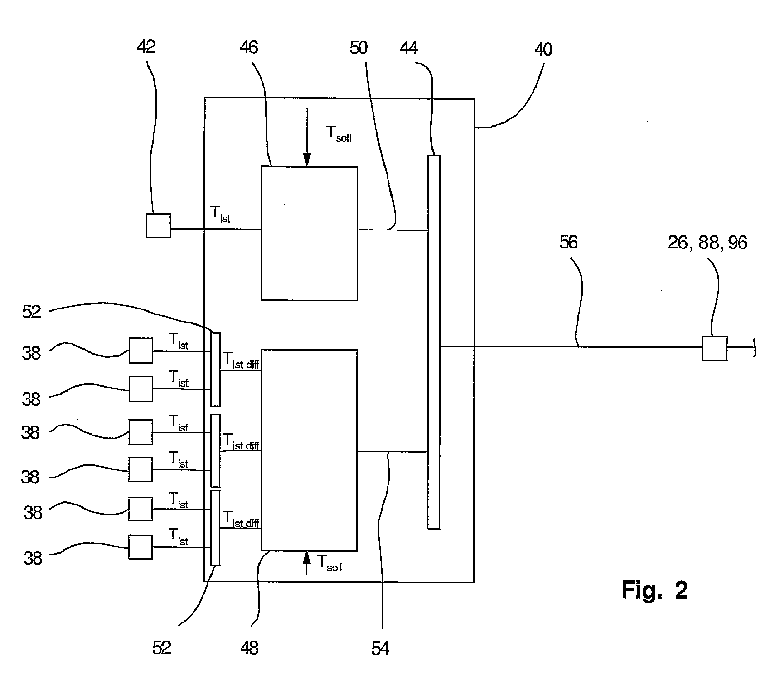

In Figur 2 ist der schematische Ablauf der Regelung des hydraulischen Abgleichs im Zusammenwirken mit der Temperaturregelung dargestellt, wobei aus Gründen der besseren Übersicht Figur 2 nur die Regelung eines Raumes 8 bzw. des weiter unten beschriebenen Kreislaufs 74 bis 78 zeigt.

Die Temperaturregelung ist herkömmlicher Art: der als Temperatursensor 42 ausgebildete Sensor wirkt mit dem Temperaturregler 46 zusammen. Über den Temperatursensor 42 wird dem Temperaturregler 46 die Ist-Temperatur Tᵢₛₜ im Raum 8 zugeführt. Die gewünschte Soll-Temperatur Tₛₒₗₗ für den Raum 8 ist vorneweg eingestellt und in der Steuereinheit 40 gespeichert worden. Diese Soll-Temperatur Tₛₒₗₗ wird dem Temperaturregler 46 durch einen Speicher der Steuereinheit 40 zur Verfügung gestellt. Über einen Soll-/Ist-Vergleich ergibt sich ein zugeordnetes Stellsignal 50 für den Stellmotor 26 des Ventils 28. Beispielsweise beim Heizvorgang, wenn die Soll-Temperatur Tₛₒₗₗ höher als die Ist-Temperatur Tᵢₛₜ ist, muss das Ventil 28 geöffnet werden, damit die Durchflussmenge des Wärmeträgers und somit die Wärmeabgabe des Heizkörpers 22 im Raum 8 erhöht wird.

Neben dem Temperaturregler 46 ist auch der Regler 48 für den hydraulischen Abgleich in den Etagen 8a bis 8c bzw. in dem weiter unten beschriebenen Kreislauf 74 bis 78 und zwischen den Etagen 8a und 8c vorgesehen. Dabei ist jeder einem Vorlauf und einem Rücklauf zugeordneter Temperatursensor 38 einem Temperaturdifferenzermittler 52 zugeordnet, der aus den von den Temperatursensoren 38 gelieferten Temperaturen die Temperaturdifferenz im Wärmeträger vor und nach dem Heizkörper 22 bzw. vor und nach dem Verbrauchen feststellt. Diese Temperaturdifferenz entspricht einer Ist-Differenztemperatur T_{ist diff}.

Die Sollwert-Temperaturdifferenz T_{soll diff} ergibt sich aus einer Kennlinie, die sich auf eine voreingestellte Temperaturdifferenz zwischen Vorlauf und Rücklauf am Heizkörper 22 bzw. aus Verbrauchen in Abhängigkeit der Öffnungsstellung des Ventils 28 und der Vorlauftemperatur bezieht. Der Sollwert T_{soll diff} weist eine gewisse Toleranz auf. Je mehr Verbraucher aktiv und somit Heizkörper 22 in Betrieb sind, desto kleiner ist die Toleranz und je weniger Verbraucher aktiv und somit Heizkörper 22 in Betrieb sind, desto größer ist die Toleranz. Das Stellsignal des Reglers 48 für den hydraulischen Abgleich ist durch das Bezugszeichen 54 dargestellt.

Befindet sich der Temperaturdifferenzwert T_{ist diff} innerhalb des Toleranzwertes T_{soll diff}, so entspricht das Stellsignal 54 einem Wert von 100% Öffnen des Durchgangsquerschnitts des Ventils 28. Befindet sich der Temperaturdifferenzwert T_{ist diff} außerhalb des Toleranzwertes T_{soll diff}, so weist das Stellsignal 54 einen Wert auf, der einen hydraulischen Abgleich gewährleistet, also auf alle Fälle kleiner als der Wert des Stellsignals 50 des Temperaturreglers 46 ist.

Der Wert des Stellsignals 54 des Reglers 48 für den hydraulischen Abgleich ist somit entweder entsprechend 100% des Öffnungsquerschnitts des Ventils 28 zugeordnet oder kleiner als der Wert des Stellsignals 50 der Temperaturregelung.

Die Stellsignale 50 und 54 werden dann einer Minimumauswahleinrichtung 44 zugeführt, sodass nur der kleinere Wert 56 eines Stellsignals 50 oder 54 dem Stellmotor 26 des Ventils 28 zugeführt wird.

Die Steuereinrichtung 40 sorgt dafür, dass der hydraulische Abgleich in Schritten erfolgt, sodass ein Überschwingen vermieden wird und das System sich einschwingen kann.

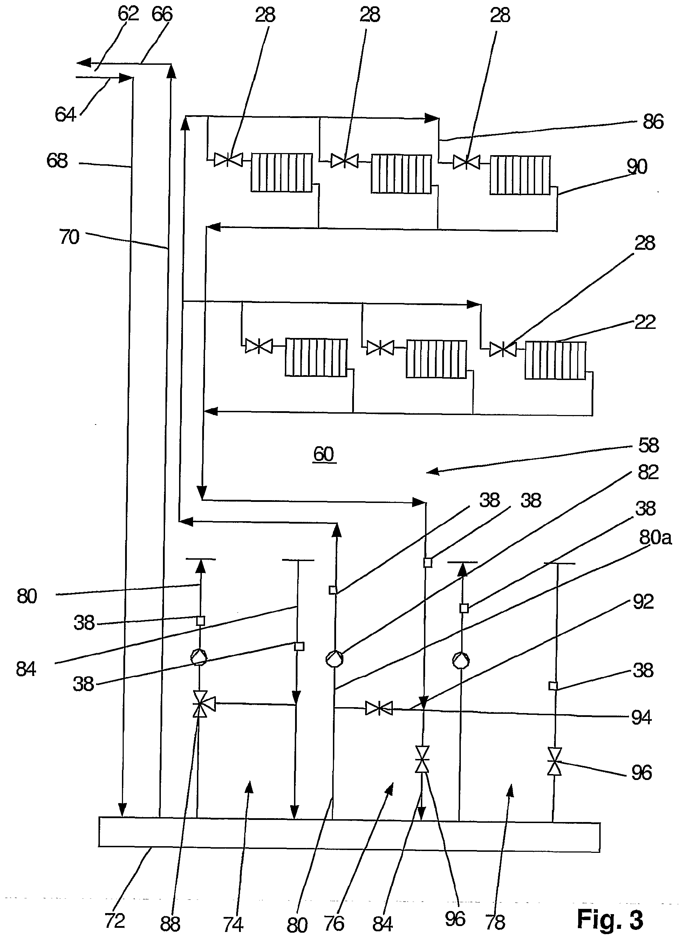

In Figur 3 ist schematisch eine weitere Ausführungsform der Erfindung dargestellt. Hier wirkt ein Ventil 96 als Strangsperre und wird entsprechend dem bisherigen Ventil 28 mit einer Regelung des hydraulischen Abgleichs über einen aus Gründen der Übersicht nicht dargestellten Stellmotor gesteuert, wobei im Kreislauf 74 das Ventil das Bezugszeichen 88 führt und als Dreiwegeventil ausgebildet ist.

In Figur 3 ist eine Versorgungseinheit 58, die Teil einer zentralen Kühl- und Heizvorrichtung 60 ist, dargestellt. Der Einfachheit halber ist nur eine Versorgungseinheit 58 gezeigt. Die Kühl- und Heizvorrichtung 60 wird aber aus mehreren Versorgungseinheiten 58 gebildet, die entsprechend der dargestellten Versorgungseinheit 58 aufgebaut sind und jeweils ein Gebäude versorgen.

Die Hauptversorgungsleitung 62 weist einen Hauptvorlauf 64 und einen Hauptrücklauf 66 auf. Über die Zuführleitung 68 und Rückführleitung 70 ist eine Verteilereinheit 72 an die Hauptversorgungsleitung 62 angeschlossen. Die Verteilereinheit 72 ist Teil der Versorgungseinheit 58.

Die Versorgungseinheit 58 umfasst des Weiteren beispielsweise drei Kreisläufe 74, 76 und 78, nämlich einen Lüftungskreislauf 74, einen Heizkreislauf 76 und einen Brauchwasserkreislauf 78. Jeder der drei Kreisläufe 74, 76 und 78 verfügt über eine Vorlaufleitung 80, eine Pumpe 82 und eine Rücklaufleitung 84. Die Kreisläufe 74, 76 und 78 bilden verschiedene hydraulische Schaltungen. Die Kreisläufe 74, 76 und 78 sind aber an und für sich bekannt, sodass sich eine weitere Beschreibung erübrigt. Nur auf den Heizkreislauf 76 wird im Folgenden beispielhaft näher eingegangen.

Der detailliert dargestellte Heizkreislauf 76 ist als Einspritzschaltung ausgebildet und mit mehreren Heizkörpern 22 versehen. Jedem Heizkörper 22 ist in der Zulaufleitung 86 ein Ventil 28 zugeordnet. Die Zulaufleitung 86 des Heizkörpers 22 ist an den Vorlauf 80 und die Ablaufleitung 90 an den Rücklauf 84 des Heizkreislaufes 76 angeschlossen.

Die Vorlaufleitung 80 und die Rücklaufleitung 84 des Heizkreislaufes 76 sind über einen Bypass 92 miteinander verbunden, in den ein mechanischer Schieber 94 integriert ist. Die Schieberstellung ist dabei fest eingestellt, also vollständig geöffnet. Er wird nicht verstellt.

Im Rücklauf 84 des Heizkreislaufes 76 ist stromabwärts vom Bypass 92 ein weiteres Ventil 96 zur Regulierung der Durchflussmenge und somit der Vorlauftemperatur eingebracht. Mittels der Regelung/Steuerung des Ventils 96 erfolgt ein hydraulischer Abgleich entsprechend dem vorher beschriebenen Ausführungsbeispiel, zwischen den einzelnen Kreisläufen 74 bis 78. Dafür sind in die Vorlaufleitung 80 und in die Rücklaufleitung 84 die Temperatursensoren 38 eingebracht, die mit einer Steuereinheit 40 zusammenwirken, die der vorher beschriebenen entspricht.

Auch die anderen Ventile 28 können für einen hydraulischen Abgleich mit den Sensoren im Zulauf 86 und Ablauf 90 versehen sein - müssen aber nicht. Es genügt auch, wenn zwischen den Kreisläufen 74, 76 und 78 ein hydraulischer Abgleich erfolgt.

### BEZUGSZEICHENLISTE

- 2: Gebäude
- 4: Wirtschaftsraum
- 6: Wärmequelle
- 8: Raum
- 8a-8c: Etagen
- 10: Zentralheizung
- 12a-12c: Teilstränge
- 14: Steigleitung Vorlauf
- 16: Steigleitung Rücklauf
- 18: Vorlaufleitung eines Teilstranges
- 20: Rücklaufleitung eines Teilstranges
- 22: Heizkörper
- 24: Zulaufleitung eines Heizstranges
- 26: Stellmotor
- 28: Ventil
- 30: Ablaufleitung eines Heizstranges
- 32: erster Heizstrang
- 34: zweiter Heizstrang
- 36: dritter Heizstrang
- 38: Temperatursensor
- 40: Steuereinheit
- 42: weitere Sensoren
- 44: Minimumauswahleinrichtung
- 46: Temperaturregler
- 48: Regler des hydraulischen Abgleichs
- 50: Stellsignal für Stellmotor des Temperaturreglers
- 52: Temperaturdifferenzermittler
- 54: Stellsignal für hydraulischen Abgleich
- 56: Stellsignal der Minimumauswahleinrichtung
- 58: Versorgungseinheit
- 60: zentrale Kühl- und/oder Heizvorrichtung
- 62: Hauptversorgungsleitung
- 64: Hauptvorlauf
- 66: Hauptrücklauf
- 68: Zuführleitung
- 70: Rückführleitung
- 72: Verteilereinheit
- 74: Lüftungskreislauf
- 76: Heizkreislauf
- 78: Brauchwasserkreislauf
- 80: Vorlauf Kreislauf
- 80a: Teilstück des Vorlauf Kreislauf
- 82: Pumpe
- 84: Rücklauf Kreislauf Ventil
- 86: Zulaufleitung Heizkörper
- 88: Ventil
- 90: Ablaufleitung Heizkörper
- 92: Bypass
- 94: Schieber
- 96: Ventil

## Patentansprüche

1. Kühl- und/oder Heizvorrichtung (10, 60) mit einer Wärme- oder Kühl-Einheit (8a, 8b, 8c) oder mehreren Wärme- oder Kühl-Einheiten (8a bis 8c), mit einem Leitungsnetz mit Vor- und Rücklaufleitungen (14, 16; 68, 70), mit mehreren an die Vor- und Rücklaufleitungen (14, 16; 68, 70) angeschlossenen Kreisläufen (12a bis 12c; 32 bis 38; 74 bis 78), mit zumindest einem in jedem Kreislauf eingebrachten Ventil (28, 88, 96), durch die der Volumenstrom durch die Kreisläufe (12a bis 12c; 32 bis 38; 74 bis 78) einstellbar ist, mit einem Fluid als Wärmeträger oder Kühlmittel im Leitungsnetz, mit zumindest einem Verbraucher (22) in jedem Kreislauf (12a bis 12c; 32 bis 38; 74 bis 78), wobei die Ventile (28, 88, 96) mit einer Steuereinheit (40) zum Einstellen der Durchgangsöffnungen der Ventile (28, 88, 96) verbunden sind, Sensoren (38) in den einzelnen Kreisläufen (12a bis 12c; 32 bis 38; 74 bis 78) vorgesehen sind, die Sensoren (38) Teil eines Regelkreises der Steuereinheit (40) sind, welche die Ventile (28, 88, 98) in Abhängigkeit der von den Sensoren (38) an die Steuereinheit gesendeten Signale so einstellt, dass sich ein hydraulischer Abgleich zwischen den einzelnen Kreisläufen (12a bis 12c; 32 bis 38; 74 bis 78) einstellt, wobei das Ventil (28, 88, 96), welches mit der Steuereinheit verbunden ist, in dem Kreislauf (12a bis 12c, 32 bis 38, 74 bis 78) über einen vorbestimmten Einstellbereich des Ventils (28, 88, 96) neben dem Verbraucher (22) den einzigen Durchlaufbegrenzer des Kreislaufs (12a bis 12c, 32 bis 38, 74 bis 78) in Form eines einstellbaren Ventils bildet oder die Ventile (28, 88, 96), welche mit der Steuereinheit verbunden Sind, in dem Kreislauf (12a bis 12c, 32 bis 38, 74 bis 78) über einen vorbestimmten Einstellbereich der Ventile neben dem Verbraucher (22) die einzigen Durchlaufbegrenzer des Kreislaufs (12a bis 12c, 32 bis 38, 74 bis 78) in Form einstellbarer Ventile bilden, **dadurch gekennzeichnet, dass** die Steuereinheit (40) ausgebildet ist, einen geregelten hydraulischen Abgleich durchzuführen, indem die Einstellung der Ventile (28, 88, 96) in zeitlichen und im Hinblick auf den Umfang der Einstellung der Durchgangsöffnung des Ventils (28, 88, 96) in vorgegebenen Schritten erfolgt, und dass im Kreislauf (12a bis 12c, 32 bis 38, 74 bis 78) vor und nach dem Verbraucher (22) jeweils ein Sensor (38) vorgesehen ist.

2. Kühl- und/oder Heizvorrichtung nach Anspruch 1, **dadurch gekennzeichnet, dass** der Sensor (38) durch einen Temperatur- und Drucksensor oder einen Drucksensor gebildet ist.

3. Kühl- und/oder Heizvorrichtung nach einem der vorangehenden Ansprüche, **dadurch gekennzeichnet, dass** die Ventile (28, 88, 96) im Leitungsnetz über einen vorbestimmten Einstellbereich des Ventils (28, 88, 96) die einzigen Durchlaufbegrenzer des Leitungsnetzes bilden.

4. Kühl- und/oder Heizvorrichtung nach einem der vorangehenden Ansprüche, **dadurch gekennzeichnet, dass** das Ventil (28, 88, 96) mit einem Stellmotor (26) zusammenwirkt, der seine Stellsignale (56) von der Steuereinheit (40) erhält und das Stellglied des Ventils (28, 88, 96) in seine durch das Stellsignal (56) vorgegebene Position bewegt.

5. Kühl- und/oder Heizvorrichtung nach einem der vorangehenden Ansprüche, **dadurch gekennzeichnet, dass** das Ventil (28, 88, 96) so ausgebildet ist, dass es außerhalb des vorbestimmten Einstellbereichs, bei vollständiger Öffnung seiner Durchgangsöffnung nicht als Durchlaufbegrenzer/Drossel im Hinblick auf den zugeordneten Kreislauf bzw. Leitungsnetz wirkt.

6. Kühl- und/oder Heizvorrichtung nach einem der vorangehenden Ansprüche, **dadurch gekennzeichnet, dass** die Steuereinheit (40) einen ersten Regelkreis (42, 46) für die Regelung der Temperatur und einen zweiten Regelkreis (38, 48, 52) für die Regelung des hydraulischen Abgleichs der Kreisläufe aufweist.

7. Kühl- und/oder Heizvorrichtung nach Anspruch 6, **dadurch gekennzeichnet, dass** die Steuereinheit mit einer Minimumauswahleinrichtung (40) versehen ist, die mit den Ausgängen der Regelkreise (42, 46; 38, 48, 52) so verbunden ist, dass sich die aus den beiden Regelkreisen (42, 46; 38, 48, 52) ergebenden Stellsignale (50, 54) für das Ventil (28, 88, 96) oder die Ventile (28, 88, 96) über eine Minimumauswahleinrichtung (44) in der Steuereinheit (40) geführt werden, wodurch das Ventil (28, 88, 96) bei unterschiedlichen Stellsignalen die Minimalstellung einnimmt.

## Claims

1. Cooling and/or heating device (10, 60) having a thermal or cooling unit (8a, 8b, 8c) or multiple thermal or cooling units (8a to 8c), having a line network with supply and return lines (14, 16; 68, 70), having multiple circuits (12a to 12c; 32 to 38; 74 to 78) connected to the supply and return lines (14, 16; 68, 70), having at least one valve (28, 88, 96) incorporated in each circuit, by way of which the volume flow through the circuits (12a to 12c; 32 to 38; 74 to 78) is able to be set, having a fluid as a heat-transfer medium or coolant in the line network, having at least one consumer (22) in each circuit (12a to 12c; 32 to 38; 74 to 78), wherein the valves (28, 88, 96) are connected to a control unit (40) for setting the passage openings of the valves (28, 88, 96), sensors (38) are provided in the individual circuits (12a to 12c; 32 to 38; 74 to 78), the sensors (38) are part of a regulating loop of the control unit (40), which, in a manner dependent on the signals sent by the sensors (38) to the control unit, sets the valves (28, 88, 98) such that hydraulic balancing between the individual circuits (12a to 12c; 32 to 38; 74 to 78) is established, wherein the valve (28, 88, 96) which is connected to the control unit forms, in the circuit (12a to 12c; 32 to 38; 74 to 78), in the form of a settable valve, the sole passage limiting means of the circuit (12a to 12c; 32 to 38; 74 to 78) over a predetermined setting range of the valve (22, 88, 96) apart from the consumer (22), or the valves (28, 88, 96) which are connected to the control unit form, in the circuit (12a to 12c; 32 to 38; 74 to 78), in the form of settable valves, the sole passage limiting means of the circuit (12a to 12c; 32 to 38; 74 to 78) over a predetermined setting range of the valves apart from the consumer (22), **characterized in that** the control unit (40) is configured for carrying out regulated hydraulic balancing **in that** the setting of the valves (28, 88, 96) is realized in temporal and, with respect to the extent of the setting of the passage opening of the valve (28, 88, 96), in predefined steps, and **in that**, in the circuit (12a to 12c; 32 to 38; 74 to 78), there is provided upstream and downstream of the consumer (22) in each case one sensor (38).

2. Cooling and/or heating device according to Claim 1, **characterized in that** the sensor (38) is formed by a temperature and pressure sensor or by a pressure sensor.

3. Cooling and/or heating device according to either of the preceding claims, **characterized in that** the valves (28, 88, 96) form, in the line network, the sole passage limiting means of the line network over a predetermined setting range of the valve (28, 88, 96) .

4. Cooling and/or heating device according to one of the preceding claims, **characterized in that** the valve (28, 88, 96) interacts with an actuating motor (26) which receives its actuating signals (56) from the control unit (40) and which moves the actuating member of the valve (28, 88, 96) into its position predefined by the actuating signal (56).

5. Cooling and/or heating device according to one of the preceding claims, **characterized in that** the valve (28, 88, 96) is configured such that, in the case of complete opening of its passage opening, it does not act as a passage limiting means/throttle with respect to the assigned circuit or line network outside the predefined setting range.

6. Cooling and/or heating device according to one of the preceding claims, **characterized in that** the control unit (40) has a first regulating loop (42, 46) for the regulation of the temperature and has a second regulating loop (38, 48, 52) for the regulation of the hydraulic balancing of the circuits.

7. Cooling and/or heating device according to Claim 6, **characterized in that** the control unit is provided with a minimum selection device (40) which is connected to the outputs of the regulating loops (42, 46; 38, 48, 52) such that the actuating signals (50, 54) for the valve (28, 88, 96) or the valves (28, 88, 96), which signals result from the two regulating circuits (42, 46; 38, 48, 52), are guided via a minimum selection device (44) in the control unit (40), whereby, with different actuating signals, the valve (28, 88, 96) assumes the minimum setting.

## Revendications

1. Dispositif de refroidissement et/ou de chauffage (10, 60) comprenant une unité de chauffage ou de refroidissement (8a, 8b, 8c) ou plusieurs unités de chauffage ou de refroidissement (8a à 8c), avec un réseau de conduites comprenant des conduites aller et retour (14, 16 ; 68, 70), avec plusieurs circuits (12a à 12c ; 32 à 38 ; 74 à 78) raccordés aux conduites aller et retour (14, 16 ; 68, 70), avec au moins soupape (28, 88, 96) montée dans chaque circuit, par le biais de laquelle le débit volumique à travers les circuits (12a à 12c ; 32 à 38 ; 74 à 78) peut être ajusté, avec un fluide en tant que fluide caloporteur ou fluide de refroidissement dans le réseau de conduites, avec au moins un consommateur (22) dans chaque circuit (12a à 12c ; 32 à 38 ; 74 à 78), les soupapes (28, 88, 96) étant connectées à une unité de commande (40) pour ajuster les ouvertures de passage des soupapes (28, 88, 96), des capteurs (38) étant prévus dans les circuits individuels (12a à 12c ; 32 à 38 ; 74 à 78), les capteurs (38) faisant partie d'un circuit de réglage de l'unité de commande (40) qui ajuste les soupapes (28, 88, 98) en fonction des signaux envoyés à l'unité de commande par les capteurs (38) de telle sorte qu'un équilibrage hydraulique s'établisse entre les circuits individuels (12a à 12c ; 32 à 38 ; 74 à 78), la soupape (28, 88, 96) qui, est raccordée à l'unité de commande, formant dans le circuit (12a à 12c ; 32 à 38 ; 74 à 78), en tant que soupape réglable, en plus du consommateur (22), le seul limiteur d'écoulement du circuit (12a à 12c ; 32 à 38, 74 à 78) sur une plage d'ajustement prédéterminée de la soupape (28, 88, 96) ou les soupapes (28, 88, 96) qui sont raccordées à l'unité de commande formant dans le circuit (12a à 12c ; 32 à 38, 74 à 78), en tant que soupapes réglables, en plus du consommateur (22), les seuls limiteurs d'écoulement du circuit (12a à 12c, 32 à 38 ; 74 à 78) sur une plage d'ajustement prédéterminée des soupapes, **caractérisé en ce que** l'unité de commande (40) est réalisée de manière à effectuer un équilibrage hydraulique régulé en effectuant le réglage des soupapes (28, 88, 96) par étapes prédéfinies dans le temps et en rapport avec l'ampleur du réglage de l'ouverture de passage de la soupape (28, 88, 96), et **en ce qu'**un capteur (38) est à chaque fois prévu dans le circuit (12a à 12c, 32 à 38, 74 à 78) avant et après le consommateur (22).

2. Dispositif de refroidissement et/ou de chauffage selon la revendication 1, **caractérisé en ce que** le capteur (38) est formé par un capteur de température et de pression ou par un capteur de pression.

3. Dispositif de refroidissement et/ou de chauffage selon l'une quelconque des revendications précédentes, **caractérisé en ce que** les soupapes (28, 88, 96) forment dans le réseau de conduites, sur une plage de réglage prédéterminée de la soupape (28, 88, 96), les seuls limiteurs d'écoulement du réseau de conduites.

4. Dispositif de refroidissement et/ou de chauffage selon l'une quelconque des revendications précédentes, **caractérisé en ce que** la soupape (28, 88, 96) coopère avec un moteur de réglage (26) qui reçoit ses signaux de commande (56) de l'unité de commande (40) et qui déplace l'organe de commande de la soupape (28, 88, 96) dans sa position prédéfinie par le signal de commande (56).

5. Dispositif de refroidissement et/ou de chauffage selon l'une quelconque des revendications précédentes, **caractérisé en ce que** la soupape (28, 88, 96) est réalisée de telle sorte qu'à l'extérieur de la plage de réglage prédéterminée, en cas d'ouverture complète de son ouverture de passage, elle ne fonctionne pas en tant que limiteurs d'écoulement/étranglement en rapport avec le circuit ou le réseau de conduites associés.

6. Dispositif de refroidissement et/ou de chauffage selon l'une quelconque des revendications précédentes, **caractérisé en ce que** l'unité de commande (40) présente un premier circuit de réglage (42, 46) pour le réglage de la température et un deuxième circuit de réglage (38, 48, 52) pour le réglage de l'équilibrage hydraulique des circuits.

7. Dispositif de refroidissement et/ou de chauffage selon la revendication 6, **caractérisé en ce que** l'unité de commande est pourvue d'un dispositif de sélection de minimum (40) qui est raccordé aux sorties des circuits de réglage (42, 46 ; 38, 48, 52) de telle sorte que les signaux de commande (50, 54) résultant des deux circuits de réglage (42, 46 ; 38, 48, 52) pour la soupape (28, 88, 96) ou les soupapes (28, 88, 96) passent par un dispositif de sélection de minimum (44) dans l'unité de commande (40), de sorte que la soupape (28, 88, 96) adopte la position minimale dans le cas de différents signaux de commande.
